# EUROPEAN PATENT SPECIFICATION

(11) **EP 3 015 964 B1**
(45) Date of publication and mention of the grant of the patent: **22.05.2019**
(21) Application number: 14003668.2
(22) Date of filing: 30.10.2014
(51) Int. Cl.: G06F 3/048

(54) **Controlling a graphical user interface**
Steuerung einer grafischen Benutzerschnittstelle
Commande d'une interface utilisateur graphique

(43) Date of publication of application: 04.05.2016
(73) Proprietor: Amadeus S.A.S., 06410 Biot (FR)
(72) Inventor: Ducat, Fabien, 06600 Antibes (FR); Giovannini, Vincent, 06220 Vallauris (FR); Exbrayat, Florent, 06560 Valbonne (FR); Attias, Christophe, 69270 Fontaines Saint Martin (FR); Stasinos, Christos, 06160 Juan les Pins (FR)
(74) Representative: Samson & Partner Patentanwälte mbB

(56) References cited:
- EP-A1- 2 081 108
- WO-A1-2011/054072
- AU-A1- 2008 261 147

## Description

### Field of the Invention

The invention generally relates to a method of controlling a graphical user interface, and in particular, to devices and computer software for this method.

### Background of the Invention

A graphical user interface (GUI) is a user interface allowing the user to interact with an electronic device. The GUI has (graphical) elements for the user to interact with. For example, such elements represent buttons, input fields, check boxes, icons, text fields and so on.

Difficulties appear, since a user wants to navigate through the GUI, which means that he wants to navigate from one element of the GUI to another one. Such navigation should be as intuitively as possible to simplify the usage of the GUI. However, from the perspective of a developer of the GUI, implementing the navigation through the GUI within the electronic device should require as little effort as possible. Furthermore, designing and/or adapting the GUI for different devices and/or different tasks demands high flexibility as well as comfortable maintenance of the underlying navigation mechanism of the GUI. Moreover, the GUI and, in particular, its underlying navigation mechanism should require as less resources of the electronic device as possible.

Furthermore, nowadays demands require new application being web oriented in many functional areas. For example, in HTML 4.01 an element must receive focus from the user in order to become active and perform its tasks. For example, users must activate a link specified by the A element in order to follow the specified link. Similarly, users must give a TEXT AREA focus in order to enter text into it. For giving focus to an element a user may navigate from one element to the next with the keyboard. An HTML document's author may define a tabbing order that specifies the order in which elements will receive focus if the user navigates the document with the keyboard. Once selected, an element may be activated by some other key sequence.

In HTML 4.01, tabbing navigation is based on attribute definitions "tabindex = positive number". This attribute specifies the position of a respective element in the tabbing order for a particular document. Elements that may receive focus should be navigated by user agents according to the following rules: 1) Those elements that support the tabindex attribute and assign a positive value to it are navigated first. Navigation proceeds from the element with the lowest tabindex value to the element with the highest value. Values need not be sequential nor must they begin with any particular value. Elements that have identical tabindex values should be navigated in the order they appear in the character stream. 2) Those elements that do not support the tabindex attribute or support it and assign it a value of 0 are navigated next. These elements are navigated in the order they appear in the character stream. 3) Elements that are disabled do not participate in the tabbing order. According to HTML 4.01, the following elements support the tabindex attribute: A, AREA, BUTTON, INPUT, OBJECT, SELECT, and TEXTAREA.

WO 2011/054072 A1 describes navigating through structured content, such as a webpage. Focusable elements may be defined with attributes for capturing directional navigation instructions and calling event handling functions in response to detected directional navigation instructions. According to WO 2011/054072, this method does not expressly define a navigation order for each element in the content.

EP 2081108 A1 describes navigating graphical user interface comprising a plurality of visual elements.

Therefore, a need exists in the art for improving the navigation through a GUI with respect to developing, implementing and/or controlling of the GUI of an electronic device.

### Summary of the Invention

The invention is defined by the independent claims.

According to a first aspect, a method of controlling a graphical user interface (GUI) of an electronic device is provided. The GUI is defined by a GUI definition document, which is processed by the electronic device. The GUI definition document defines a layout of the GUI for rendering the GUI, navigable elements of the GUI, at least one navigation event, and at least one navigation data set per navigable element. Such a navigation data set specifies for a respective one of the at least one navigation event a next one of the navigable elements to be navigated to in response to the navigation event. The method further includes rendering, by the electronic device, the GUI according to the layout, and, navigating from a current navigable element to a next navigable element of the GUI. The latter includes receiving, by the electronic device, a navigation event, and in response to the received navigation event, setting, by the electronic device, the current navigable element as inactive and the next navigable element as active for user interaction, wherein the next avigable element is determined based on the at least one navigation data set of the current navigable element.

According to another aspect an electronic device for controlling the GUI is provided, wherein the electronic device is configured to control the GUI according to the method described above.

According to another aspect a system for controlling the GUI according to the method described above is provided. The system comprises an electronic server device (server) configured to provide the GUI definition document and an electronic device (client) configured as a client to receive the GUI definition document from the server, wherein the client is configured to control the GUI according to the method described above.

According to another aspect a computer program configured to control a graphical user interface (GUI) of an electronic device is provided. The GUI is defined by a GUI definition document (which can be processed by an electronic device). The GUI definition document defines a layout of the GUI for rendering the GUI, navigable elements of the GUI, at least one navigation event, and at least one navigation data set per navigable element. Such a navigation data set specifies for a respective one of the at least one navigation event a next one of the navigable elements to be navigated to in response to the navigation event. The computer program is further configured to render (e.g. by the electronic device) the GUI according to the layout, and, navigating from a current navigable element to a next navigable element of the GUI. The latter includes receiving (e.g. by the electronic device) a navigation event, and in response to the received navigation event, setting (e.g. by the electronic device) the current navigable element as inactive and the next navigable element as active for user interaction, wherein the next navigable element is determined based on the at least one navigation data set of the current navigable element. According to another aspect a computer program product is provided. The computer program product includes a computer readable medium. It further includes program code stored on the computer readable medium and configured upon execution by at least one processor to perform the method described above.

Further aspects are set forth by the dependent claims.

### General description

Before turning to the more detailed description with reference to the figures, a few more general aspects are discussed first.

The GUI is defined by the GUI definition document. The GUI definition document includes definitions of the layout of the GUI, definitions of the navigable elements of the GUI, definitions of at least one navigation event and definitions of the at least one navigation data set per navigable element. In other words, on the basis of only a single document the GUI definition document at least defines the appearance of the GUI as well as the GUI's behavior with regard to navigation through the GUI in terms of the layout, navigable elements, navigation event(s) and navigation data sets. Defining both, the layout and the navigation mechanisms of the GUI in a single GUI definition document (although this may include various files) reduces the effort for developing GUIs and/or allows a more compact, resource-friendly definition of the GUI.

Since the GUI definition document includes the definition of the layout and the definitions of the navigable elements, the electronic device can render the GUI to display it for a user of the device as well as provide the navigation functionality of the GUI based on a single document, namely the GUI definition document.

For efficient processing and storage of the GUI definition document and/or for improved data communication, e.g. for transmitting the GUI definition document from the server to the client, in some embodiments the GUI definition document is represented by a single file. Alternatively, e.g. for improving data separation, in some embodiments the GUI definition document is represented by multiple files, which together build up the GUI definition document.

The electronic device may be of any type including, for example, desktop computers, laptops, tablet computers, smartphones, TVs, game consoles, car navigation devices, car entertainment devices, etc. In some embodiments the electronic device is equipped with a keyboard. A navigation event may be received in response to pressing a key or a combination of keys of the keyboard.

In some embodiments the electronic device has a display for displaying the rendered GUI (strictly speaking a view of the GUI is being rendered according to the layout of the GUI and displayed).

In some embodiments the electronic device is a client which is arranged to receive the GUI definition document from a server. In some embodiments the client and the server are members of a system, which is configured to carry out the methods described herein. The client and the server may be connected by wire and/or wireless technology, for example via an Internet or intranet connection.

In some embodiments the GUI definition document defines at least two layouts. This enables the client to select one of the multiple layouts when rendering the GUI. For example, different layouts may define different color schemes, different sizes of the navigable elements, different languages for text to be rendered in the view of the GUI. For example, a first layout may be designated for displaying the GUI on a display of a stationary device, e.g. a personal computer display, and a second layout may be designated for displaying the GUI on a display of a mobile device, e.g. a laptop computer display, a tablet computer display and/or a mobile phone display. For providing identical navigational behavior of the GUI independent from the respective layout, in some embodiments each layout incorporates all, the same set or the same subset of the navigable elements defined in the GUI definition document. Alternatively, to provide different navigational behaviors of the GUI, in some other embodiments a first layout incorporates a first set of navigable elements and a second layout incorporates a second set of navigable elements, wherein the first and second set may be disjunctive.

The navigation data sets contribute to the navigational behavior of the GUI. A navigation data set includes at least two pieces of information: it specifies a navigable element to be navigated to in response to a particular navigation event. Thus, a navigation data set builds an interrelation between a respective navigation event and a navigable element, and, thus, a navigation data set associates a navigable element with a particular navigation event for a respective navigable element. A navigation data set may be understood as a property of a particular navigable element. For example, navigation data sets of different navigable elements may associate different navigable elements with the same navigation event and/or associate different navigation events with the same navigable element.

A particular navigable element specified by a particular navigation data set is the next navigable element out of the GUI's navigable elements to be navigated to in response to the respective navigation event specified by this navigation data set. Hence, since navigation data sets belong to their respective navigable elements, the at least one navigation data set of a particular navigable element may define for its particular navigable element the next navigable element(s), which succeed(s) the particular navigable element in dependency of the associated navigation event when navigating through the GUI.

For better understanding navigating within the navigable elements of the GUI, an exemplary navigation activity for navigating from one navigable element to a next navigable element may be described in detail:

Assuming as a start point for the exemplary navigation activity a particular one of the GUI's navigable elements being actually set as active. This navigable element, which is actually set as active, is referred to as current navigable element herein. Furthermore, if not explicitly otherwise mentioned, the term "element" is to be understood as a "navigable element" herein; hence, the expression "current element" is to be understood as "current navigable element", for example. Examples of a navigable element of the GUI are buttons, tables, table columns, table lines and table cells, text fields, checkboxes, lists with selectable entries, radio buttons, scrollbars, exit icons, drop-down menus and other menu elements, windows, pop-up windows, etc.

Turning back to the exemplary navigation activity, for example in response to a user input, a particular navigation event (being defined in the GUI definition document) may be received. In response to the receipt of the navigation event, this received navigation event is taken as a basis for deciding, which of the GUI's navigable elements becomes the target of the exemplary navigation activity ("next navigable element" herein), i.e. a successor element of the current element. Because of the current element (still) being the start point, the decision is based on the navigation data sets of this (current) element. In dependency of the received navigation element, that element of the GUI definition document is determined as next element, which is associated with the particular navigation event according to the current element's navigation data sets. In other words, the current element "knows" (by its navigation data sets) about all possible candidate successive elements in dependency of respective navigation event(s).

Thereupon, the current navigable element is set as inactive and the so determined next navigable element is set as active. The next navigable element, which was the target of the navigation so far, becomes the (new) current navigable element and, thereby, it becomes the new start point for a further navigation activity through the GUI. Thus, navigation through the GUI works in a stepwise manner of, figuratively expressed, hopping from one element to a next one by such navigation activities.

Thus, the navigational behavior of the GUI is defined by the navigation data sets in so far that they individually define for each element respective successive (next) elements in dependency of (different possible) navigation events. As to navigation, the navigation events trigger navigating between navigable elements, wherein each element defines by its navigation data sets the possible next navigable element to be navigated to in response to and in dependency of the navigation events. In other words, the navigation data sets are to be understood as navigation rules defining for its respective navigable element respective next navigable elements in dependency of the received navigation event.

The GUI definition document may include further navigation rules (in addition to the navigation data sets), for example navigation rules for controlling (e.g. switching between different) navigation areas (which are described below), rules for error handling and/or rules for exception handling.

The navigation rules defined in the GUI definition document follow a navigation policy for the GUI. Navigation policies describe the navigational behavior of the GUI. It might be desirable that the GUI provides different navigational behaviors, for example in dependency of a keyboard, a display and/or a device type, the GUI may be navigable through different sets of keys, e.g. either by cursor keys or by character generating keys or by function keys (F1, F2 and so on). Therefore, the GUI definition document includes different navigation policies, i.e. at least two policies.

As to navigation policies as such, a navigation policy may be an arbitrary navigation policy in some embodiments. An arbitrary navigation policy explicitly defines for a navigable element its respective next navigable elements. This gives the developer of the GUI a high degree of customization with regard to the navigational behavior of the GUI, since for a navigable element the possible next navigable elements can be individually defined in the GUI.

In some embodiments, a navigation policy may be a nearest neighbor navigation policy. Nearest neighbor navigation policy means that for a navigable element its next navigable elements are nearest neighbor navigable elements with regard to the rendered view of the GUI. Thus, in a nearest neighbor navigation policy the next navigable elements are determined by the spatial relation (in particular the position and size) of the navigable elements within the rendered view of the GUI. Nearest neighbor navigation policies may account for horizontal and/or vertical navigation, e.g. by navigating to a nearest neighbor navigable element (starting from the current element) in a horizontal and/or vertical direction in response to navigation events, e.g. associated with horizontal cursor keys (LEFT, RIGHT) and/or vertical cursor keys (UP, DOWN).

It might be desirable that the GUI is applicable independent from a specific hardware, firmware and/or operating system of the electronic device. Therefore, in some embodiments, the GUI definition document comprises a hypertext markup language document defining the layout of the GUI, for example an HTML document or XHTML document (HTML and XHTML are jointly referred to as "HTML" herein). In some embodiments, navigation rules are implemented by HTML code (e.g. as HTML objects and/or as attributes of HTML objects), JavaScript code and/or PHP code.

In some embodiments, navigation data sets are statically defined in the GUI definition document. For example, navigation data sets may be defined as one or more data array, as one or more tables and/or as HTML attributes of the HTML elements representing navigable elements. Thus, in these embodiments navigation rules can be manually set in the GUI definition document, e.g. in accordance with an arbitrary navigation policy.

In some embodiments, navigation rules are generated by program code (e.g. defined in the GUI definition document itself or by a navigation-policy implementing engine located either at the server-side or at the client-side) based on properties of the navigable elements and/or the layout of the GUI. Such navigation rules as well as their associated navigation policy can be understood as dynamic ones. In such dynamic navigation policies the next navigable element for a particular current navigable element is determined by program code, e.g. JavaScript or PHP, in dependency from respective navigation events.

In some embodiments, the nearest neighbor navigation policy is a dynamic policy in that the next navigable elements are determined by program code analyzing a spatial relation between the current navigable element and surrounding navigable elements within the rendered view of the GUI. The program code determines in response to navigation events associated with cursor keys (like UP, DOWN, LEFT, RIGHT) the nearest neighbored navigable element in the respective (up, down, left or right) direction as next element. In such embodiments, the next navigable element can be automatically determined for a current navigable element by the program code.

As the navigation events may be generated based on keyboard events only, navigating through the GUI can be performed fully without a mouse and the GUI may be implemented in mouseless environments such as a mouseless electronic device. This allows quickly navigating through the GUI, since the user does not require to switch between a keyboard and a mouse. This becomes in particular relevant with the GUI being implemented in e.g. HTML and processed by a web browser, since web browsers and/or HTML provide little functionality with regard to navigating through HTML elements. In some embodiments, the electronic device is pointing-device-less. However, in some embodiments a mouse or another pointing device may be optionally used for navigating within the GUI as described later.

As described before, navigating to the next navigable element includes setting this (next) navigable element as active. This also includes setting as inactive the element previously set as active, or all (remaining) other navigable elements of the GUI in some embodiments. Therefore, the method of controlling the GUI may include precautionary measures to ensure that only a single one of the navigable elements is set as active in any point in time at the most. Setting a navigable element as active means in some embodiments that user input may be passed to the element being set as active, whereas user input may not be passed to elements being not set as active (i.e. set as inactive). The user may interact with the navigable element set as active, for example entering text into a text input element, selecting or deselecting a check box element or pushing a button, e.g. by typing "Enter" and/or "Space" keys on the keyboard.

For guiding the user to the current element, in some embodiments navigating to the next element includes (graphically) emphasizing the next element (as it becomes the current element), e.g. in response to setting it as active. In some embodiments, setting a particular element as inactive is accompanied by (graphically) deemphasizing this particular element. For example, a navigable element may be only emphasized if it is set as active. Thus, in some embodiments only a single one of the navigable elements is emphasized at any point in time at the most. In some embodiments, (graphically) emphasizing an element includes rendering the emphasized element with a different color, with an additional shadow, with an additional border and/or with a bolder border or text as compared to when it is not emphasized.

For mouseless or pointing-device-less navigating through the GUI, i.e. without the necessity of using a pointing device like a mouse, a trackball or touch screen functionality, in some embodiments the navigation event can be a key code from the keyboard and/or a character code from a user input. In some embodiments, a keyboard event itself and/or an input event itself may be considered as a navigation event. In some embodiments navigation events are based on keyboard events and/or input events only, which means that either the method of controlling the GUI or the electronic device, e.g. an operating system of the client or an application, such as a web browser, processed by the device, generate a navigation event in response to a keyboard event and/or input event.

For example, a navigation event may be received by the method of controlling the GUI in response to a cursor key(e.g. such as "Up", "Down" "Left", "Right", "Tab", "PageUp", "PageDown", "Home", "End"), a character generating key (e.g. such as "A" through "Z", "0" through "9", "Space") or a modifier key (e.g. such as "Shift", "Alt" or "Ctrl") and/or any combination thereof being pressed on the keyboard. Hence, the present approach of defining the navigation events leading the user from the current to a next navigable element of the GUI allows a great navigation flexibility, a more universal navigation and, thus, improves the usability and operability of the electronic device.

A key code is a number named code that codes which keys or combination of keys of the keyboard were affected, e.g. by a user typing on the keyboard. The key code may further code in what manner the key(s) were affected: the key code may code whether a key was pressed down or released. In some embodiments a navigation event is received in response to pressing at least one key down and/or releasing a key of the keyboard. In some embodiments navigation events are repeatedly received during at least one key being continuously hold down. In other words, holding a key down for some time will result in firing navigation events one after another.

A character code is generated when a user input yields a character. For example, a character code may be generated on typing a character generating key of the keyboard. The character code gives an ASCII value of the character, for example. Character code and key code are not necessarily the same; for instance, a lower case "a" and an upper case "A" may have the same key code, because the user presses the same key "A" on the keyboard, but a different character code because the resulting character is different. Moreover, an upper case "A" having a particular character code may be generated by typing the key "A" either in combination with the left "Shift" key or the right "Shift" key of the keyboard, which is coded by different key codes identifying whether the left or the right "Shift" key was involved. Correspondingly, in some embodiments, the key code may also code a status of modifier keys in addition to character generating keys.

Navigation events may include or consist of a unique navigation event identifier that allows to identify and/or distinguish different navigation events by the method of controlling the GUI. For example, the unique navigation identifier may include a sequential number or the unique navigation identifier may include or consist of the key code and/or the character code. Navigation events may correspond to any code of any subset of all the keyboard available key codes and/or of any subset of all the character codes supported by the electronic device.

In some embodiments, the method of controlling the GUI involves a filter for selecting only specific events out of the possible keyboard events and/or input events. For example, this allows for generating navigation events only in response to the user pressing a particular subset of the available keys. For example, navigation events may only generated in response to cursor keys and/or a "Tab"-key or a combination of those keys, optionally in combination with particular ones of modifier keys. This further allows that no navigation event is generated in response to keyboard events and/or input events which correspond with certain keys (e.g. such as character generating keys).

For not disturbing other tasks of the electronic device, in some embodiments events (such as keyboard events and/or input events) may be passed back (to the device, the device's operating system or an event handler within the device). However, e.g. for prevent from unforeseen interferences with other tasks of the device, in some embodiments those events in response to which a navigation events has been generated are withhold from the client, i.e. they are not passed back.

In some embodiments mouse events, touch events from a touch screen and/or other pointing device events are interpreted by the method of controlling the GUI in order to update the current navigable element. For example, that navigable element of the GUI, which covers (within the rendered view of the GUI) a mouse cursor position, a touch position or a pointing device position (e.g. coded within the respective event), becomes the (new) current navigable element. This may include setting this element as active and/or emphasizing this element.

In some embodiments the GUI definition document defines at least 2, 4 or 6 navigation data sets per navigable element, wherein each navigation data set within the data sets of a particular navigable element is unique with regard to its associated navigation event. Thus, each navigable element is sensitive for exactly the number of different navigation events according to the number of its navigation data sets. A navigable element having a number n of navigation data sets is sensitive for n different navigation events.

For particular elements it may be desirable that two or more navigation events may cause navigating from this particular element as current element to the same next element. For example, in the case of navigating within navigable elements being arranged in a column within the rendered view of the GUI, it may be desirable that pressing the arrow keys "left" und "up" may navigate into the same (upward) direction, i.e. to the same upward positioned next element. Therefore, for a particular navigable element, in some embodiments the number of different next elements specified in its navigation data sets may be less than the number of navigation data sets, because at least two different navigation data sets specify the same navigable elements as next element.

For uniquely identifying each of the navigable elements, in some embodiments the GUI definition document defines a unique navigable element identifier (unique ID) for each navigable element.

In some embodiments the navigable elements are addressed by its respective unique ID. In some embodiments the navigation data set includes the unique ID of the next navigable element to specify this element to be navigated to in response to a respective navigation event. For keeping track when navigating through the GUI, in some embodiments a current navigable element identifier (current ID) is maintained. The current ID corresponds to the unique ID of the current navigable element. As to navigating from the current navigable element to the next navigable element, in some embodiments the current ID is set to the value of the unique ID of the next navigable element when navigating to the next navigable element.

In some embodiments, the GUI definition documents define other elements than navigable elements. For example, navigable elements and (per se) non-navigable elements may be differ at least in that that for a navigable elements a unique ID is defined in the GUI definition document, whereas for a non-navigable elements the GUI definition documents lacks a unique ID. Thus, the presence of a unique ID within a particular element defines whether this particular element is a navigable element or a non-navigable element. It is to be noted that in this particular paragraph the term "element" does not equals the "navigable element".

In some embodiment the electronic device initializes the GUI, e.g. before rendering the GUI for the first time. To define a start point for navigating through the GUI, in some embodiments the GUI definition document defines a start identifier (start ID), which corresponds to the unique ID of a particular one of the navigable elements. For example, initializing the GUI may include setting the current ID to the value of the start IID as defined in the GUI definition document. Thus, on initializing the GUI a particular one of the elements may be set as current navigable element, i.e. as an initial start point of the navigation. The start point may be emphasized, for example.

In some embodiments the GUI definition document defines at least one navigable element to be hidden, i.e. to be not visible by a user when rendering the GUI. In some embodiments, the GUI definition document defines a hidden-property of a respective navigable element. In some embodiments, the hidden-property of a respective navigable element may be included within the definition of the respective navigable element. For example, the hidden-property may be implemented as HTML-attribute of a navigable element defined as HTML element. In some embodiments, the hidden-property may be defined separate from the definition of the navigable element within the GUI definition document. For example, the GUI definition document defines a list including the at least one navigable element to be hidden, wherein the mere fact that a particular element is included in the list means that it is to be hidden. In some embodiments, the GUI definition document includes a table specifying for the at least one navigable element to be hidden or for all navigable elements respective hidden-attributes, which specify whether a respective element is currently to be hidden or not. At least one navigable element or each navigable element defined in the GUI definition document may have a hidden-property. Respective elements may not be rendered if their hidden-property is set as active; otherwise, if the hidden-property is set as inactive, the respective element may be rendered when rendering the GUI. In some embodiments, the hidden-properties may be toggled by the electronic device, for example for temporally hiding and/or showing the respective navigable elements (in the rendered view of the GUI) by setting the hidden-property as active and inactive respectively.

In some embodiments the GUI definition document defines at least one navigable element to be disabled. Being disabled means that a respective navigable element is prohibited from being set as current element with regard to navigating through the GUI. In some embodiments, the GUI definition document defines a disabled-property of a respective navigable element. In some embodiments, the disabled-property of a respective navigable element may be included within the definition of the respective navigable element. For example, the disabled-property may be implemented as HTML-attribute of a navigable element defined as HTML element. In some embodiments, the disabled-property may be defined separate from the definition of the navigable element within the GUI definition document. For example, the GUI definition document defines a list including the at least one navigable element to be disabled, wherein the mere fact that a particular element is included in the list means that it is to be disabled. In some embodiments, the GUI definition document includes a table specifying for the at least one navigable element to be disabled or for all navigable elements respective disabled-attributes, which specify whether a respective element is currently to be disabled or not. At least one navigable element or each navigable element defined in the GUI definition document may have a disabled-property. Disabled-properties can be toggled by the electronic device, for example. When navigating to an element with its disabled-property set as active (i.e. being a disabled element), then the disabled element is bypassed and automatically the next element from the perspective of the disabled element is set as current element, for example. However, this requires a careful design and control of the GUI, since this may result in an endless loop. The disabled-property may be toggled by the electronic device, for example to temporally prevent the user from navigating to the disabled element or to allow navigating to this element (if the disabled-property is set inactive).

In some embodiments, navigable elements to be hidden and/or to be disabled may be specified by a single attribute of a respective navigable element or a single entry in a table defined in the GUI definition document. For example, the hidden-property and the disabled-property may be combined into a single (multi-state) signal, which indicates whether a respective navigable element is hidden, is disabled or neither hidden nor disabled. In other examples, such signal may indicate whether a respective navigable element is hidden, is disabled, is hidden and disable or is neither hidden nor disabled.

In some embodiments, the GUI definition document may include an HTML document and may define the navigable elements as HTML elements. HTML documents and elements can be interpreted by a web browser to render a view of the HTML document (web page), i.e. to render the GUI. Web browsers are available on multiple kinds of electronic devices, which allows the GUI to be implemented on such devices. Using web architecture and the GUI being defined using HTML enables in some embodiments that the methods described herein are implemented on a client side, a server side, or on both sides.

In some embodiments, navigating from the current navigable element to the next navigable element is carried out by JavaScript by a web browser processed by the electronic device. JavaScript offers an event based system which triggers events when necessary so that the browser can catch them and react dynamically. This applies to keyboard events and input events. This allows that in some embodiments the method of controlling the GUI, and in particular the navigation within the GUI, is implemented fully by HTML in combination with JavaScript.

Thus, those embodiments meet the nowadays demands that new application being web oriented is required in most functional areas. As already discussed at the outset, standard HTML is very limited with regard to navigating through HTML elements within a web page. For example, HTML natively supports only switching from one input element to another using "Tab" and "Shift"+"Tab" keys. Without any specification, the order of this navigation is naturally chosen by the browser according to the order of appearance of the HTML elements within the HTML document. This order can be altered by a so-called tab-index mechanism, wherein an HTML element has a tab-index-property, which is a sequential numbering representing a ranking of the HTML elements. Hence, the tab-index-mechanism allow for linear navigation according to this ranking. However, a particular HTML element does not know about its respective neighboring elements, since it just knows its (ranking) number of the tab-index.

Thus, coming from heavy client server architecture, heavy client architecture were installed on user's computer and could take advantage of full access to the operating systems APIs and resources. On the contrary, light weight web oriented client server architectures are described into a browser. This means that they have only access to browser API and resources, wrapping some operation system functionalities. This leads to multiple technical issues such as keyboard navigation within browsers.

In some embodiments, HTML elements representing navigable elements of the GUI include HTML attributes representing at least one navigation data set of respective navigable element. This enables a web browser to render the GUI as well as navigating through the GUI, since the HTML element includes the navigation information of the navigation data sets, which specify the next element to be navigated to in response to particular navigation events. For example, a single HTML attribute of a particular element may represent exactly one navigation data set or a single HTML attribute may represent all the navigation data sets of a particular element.

For example, with regard to a particular HTML element (representing a navigable element of the GUI) its HTML attributes representing the navigation data sets can be accessed by JavaScript to determine the next navigable element in response to a received navigation event. In some embodiments, the at least one navigation data set of a particular navigable element is defined by an HTML element or HTML object other than the HTML element representing the particular navigable element. In some embodiments, the totality of navigation data sets of all navigable elements may be defined by a single HTML element or a single HTML object. In some embodiments, navigation data sets are defined by program code, e.g. JavaScript code and/or PHP-code, defined in the GUI definition document.

An HTML object can be emphasized or deemphasized as described above using JavaScript. Therefore, the GUI definition document may be an HTML document, optionally including appropriate JavaScript to carry out the above described methods. The GUI definition document may be a single (HTML) file or, alternatively, separated into multiple files.

In some embodiments also HTML elements, which are not natively navigable by HTML are defined as navigable elements in the GUI definition document. For example, in some embodiments HTML image resources are defined as navigable element in the GUI definition document. Moreover, the GUI definition documents may define any possible HTML element as a navigable element, e.g. by adding navigation data sets as HTML attributes to the respective HTML element.

As already described, different layouts defined in the GUI definition document may allow for different appearances of the GUI. Alternatively or in addition thereto, some embodiments include a further mechanism allowing inter alia different appearances as well as different navigational behavior of the GUI: the GUI definition document may define at least two navigation areas, wherein for each of the at least two navigation areas the GUI definition document defines at least one layout being associated with the respective navigation area for rendering the GUI, navigable elements associated with the respective navigation area, and at least one navigation data set per navigable element.

Using navigation areas, navigation can be (temporally) restricted to a particular navigation area by selecting one of the at least two navigation areas, rendering the GUI according to the layout of the selected navigation area and navigating from the current navigable element to the next navigable element only within the navigable elements associated with the selected navigation area. This means that a navigation event is received and that in response to the received navigation event, the current navigable element of the selected navigation area is set as inactive and the next navigable element of the selected navigation area is set as active for user interaction, wherein the next navigable element being determined based on the at least one navigation data set of the current navigable element. Thus, each navigation area can have its own navigation policy or navigation policies.

In some embodiments, this mechanism of navigation areas is processed by the electronic device to generate multiple pages, multiple windows, at least one sub-window and/or at least one pop-up window of the (rendered instance of) GUI and/or to temporally restrict navigation to a sub-region of the (rendered instance of) GUI. A navigation area can include all the navigable elements of the GUI or a genuine subset of the GUI's navigable elements. One or multiple instances of both such kinds of navigation areas may simultaneously be defined in the GUI definition document. In some embodiments the GUI defines a first navigation area being a genuine subset of a second navigation area with regard to the navigable elements. However, in some other embodiments all the navigation areas defined in the GUI definition document build pairwise disjunctive subsets with regard to the GUI's navigable elements, wherein each navigable element is included in exactly one particular navigation area.

In some embodiments, the GUI definition document defines at least one navigation area control event. The GUI definition document may define different area control events, which may include a code for activating a particular one of the at least two navigation areas, a code for deactivating a navigation area and/or a code for switching between two navigation areas respectively. Correspondingly, in response to receiving a navigation area event, in some embodiments a navigation area is activated or deactivated respectively. Activating a navigation area may include rendering the GUI according to particular one of the at least one layout of the navigation area and navigating within the navigable elements of the navigation area as generally described above with regard to the GUI as such. Navigation area events may be generated as described with regard to navigation events herein. In some embodiments, a navigation event may be received in response to pressing a key or a combination of keys of the keyboard. A navigation area control event may be a key code and/or character code, for example.

In some embodiments, an apparatus, including at least one processor and program code configured upon execution by the at least one processor to perform any of the aforementioned methods, or a program product comprising a computer readable medium and program code stored on the computer readable medium and configured upon execution by at least one processor to perform the any of the aforementioned methods, may also be provided.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there is described exemplary embodiments of the invention.

### Brief Description of the Drawings

FIGURE 1 is a flow diagram of a method of controlling a GUI.
FIGURE 2 is a block diagram of an example GUI definition document.
FIGURE 3 is a schematic plot of the navigation within navigable elements.
FIGURE 4 is a schematic plot of navigation areas.
FIGURE 5 is a block diagram illustrating an example electronic device and an example computer program product.

### Detailed Description

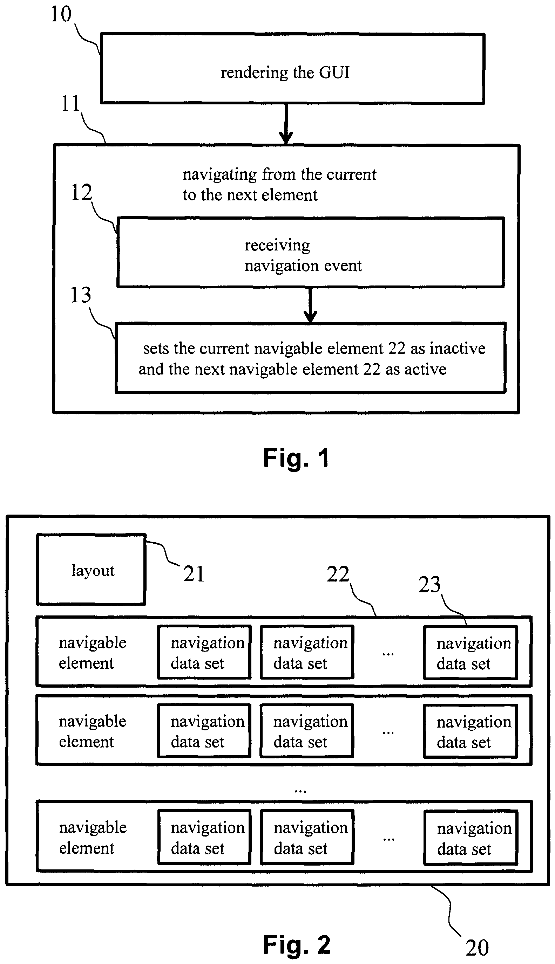

Turning now to the drawings, wherein like numbers denote like parts throughout the several views, Fig. 1 illustrates an example method of controlling a graphical user interface (GUI) of an electronic device 50. The GUI is defined by an example GUI definition document 20 illustrated in Fig. 2. The GUI definition document 20 defines a layout 21 of the GUI for rendering the GUI by the electronic device 50. The GUI definition document 20 further defines multiple navigable elements 22 of the GUI. Each navigable element 22 includes (at least two) navigation data sets 23. A respective navigation data set 23 specifies a navigation event and a next navigable 22 element to be navigated to in response to receiving the navigation event. Thus, a particular navigation data set 23 is a particular one of multiple navigation rules defined by the GUI definition document 20 for navigating within the GUI. Navigation rules defined by navigation data sets 23 define for their corresponding navigable element 22 as a current navigable element a respective next navigable element 22 in dependency of the navigation event.

Turning back to Fig. 1, the GUI definition document 20 is processed by the electronic device 50. The electronic device 50 is responsible for rendering 10 a view of the GUI according to the layout 21. Furthermore, the electronic device 50 is responsible for navigating 11 from a current navigable element 22 to a next navigable element 22. Therefore, the electronic device 50 receives 12 from a keyboard, which may be connected to the electronic device 50 or included in the device 50, a navigation event. In response to the received navigation event, as illustrated by activity 13, the electronic device 50 sets the current navigable element 22 as inactive and the next navigable element 22 as active for user interaction. For this activity 13, the next navigable element 22 is determined based on the navigation data set 23 of the current navigable element 22.

In further examples, the navigable elements of the GUI together with the navigation data sets represent a state machine, wherein a navigable element represents a state of the state machine and a navigation data sets represents a transition (of the state machine) between two of the states.

In further examples, the GUI definition document is represented by an HTML document, wherein the GUI is defined by one or more HTML Layers. Correspondingly, in those examples the GUI is rendered by a web browser processed by the electronic device. The navigable elements are (visible) HTML elements and the navigation data sets of a respective navigable element are represented by HTML attributes of the visible HTML element representing the respective navigable element.

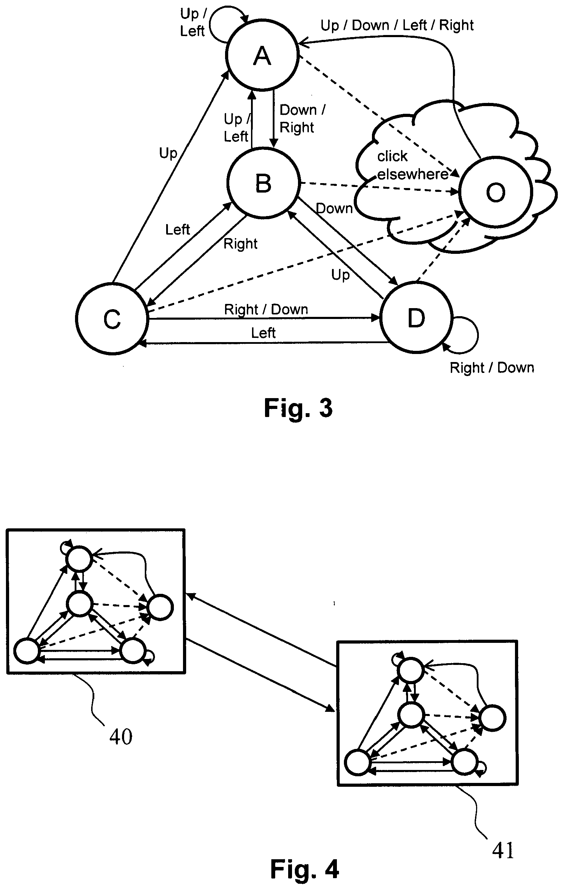

As illustrated in Fig. 3, in further examples, the GUI definition document defines four HTML elements as navigable elements, wherein each element includes a respective unique ID A, B, C, and D. In some of these examples, the GUI is a state machine. Correspondingly, the navigable elements A, B, C and D are considered as states of the state machine and the navigation data sets of the respective navigable elements A, B, C and D are considered as transitions between the states of the state machine. Further ones of these examples distinguish from the present ones in the number of states and/or transitions. Turning back to the examples illustrated in Fig. 3, the transitions are represented by HTML attributes of that respective HTML element, which represents the origin of the transition. The transitions are illustrated by arrows in Fig. 3. Transitions (i.e. the navigation data sets) represent allowed navigations between the HTML elements, wherein a the term "allowed" with regard to navigation, navigation data or navigation event means that the GUI definition document defines a corresponding navigation data set specifying the respective navigation data for the respective navigable element.

In the present example, transitions are triggered by keyboard events as navigation events. The GUI definition document defines in the present example four navigation events, which correspond to keyboard events generated by pressing cursor keys "Up", "Down", "Left" and "Right". Thus, in the present example the GUI defines four allowed navigation events. With regard to navigating within the GUI the method of controlling the GUI ignores other keyboard events than those four allowed navigation events. However, further examples distinguish in that that further or other keyboard events trigger transitions, for example in response to pressing a "Tab", "Page up", "Page Down", "Home" and/or "End" key of the keyboard an allowed navigation event is generated.

Turning back to the examples illustrated in Fig. 3, the GUI definition document further defines as a start ID the value A of the HTML element with the unique ID A. Thus, when initializing the GUI the HTML element with the unique ID A is initially set as current navigable element and emphasized to signal the user the current element. This is processed by the web browser of the electronic device using JavaScript. To keep track of the current navigable element when navigating through the GUI, a current ID is maintained by JavaScript and updated by the value of the unique ID of the next navigable element each time navigating from the current to the next navigable element.

The navigation through the GUI is exemplary discussed for one navigation activity (i.e. navigating from a current element to a next element) by the example illustrated in Fig 3. For example, the HTML element with the unique ID A (in short "element A") may be assumed as start point of the exemplary navigation activity (the following correspondingly applies to any other HTML element as start point). Thus, the element A is the current element (which is therefore actually emphasized) and the current ID has the value A. According to Fig. 3, element A allows for four transitions. Therefore, in the GUI definition document there are four navigation data sets defined for the HTML element A, which can be formulated as tuples of a respective navigation event and a corresponding next navigable element: (Up, A), (Down, B), (Left, A), (Right, B). Those tuples are implemented as an HTML attribute of the element A. Element A has exactly one navigation data set per allowed navigation event, wherein for each of the allowed navigation events a corresponding navigation data set is defined. This avoids undefined situations. Since element A is the start point, in response to pressing the cursor key "Down" the electronic device 50 determines the element B as next element by interpreting that navigation data set that corresponds to the navigation event D, which carries the information of the above mentioned tuple (Down, B) for the current element A. Therefore, the element B is (found and consequently) set as the current element, i.e. the element A is set as inactive, the element B is set as active and the current ID is updated to the value B. Furthermore, element B is emphasized, whereas the former current element A is deemphasized. Thus, by pressing the "Down" key, the user can navigate from element A to element B.

As can be further seen by the example tuples above, e.g. the tuple (Left, A), for some navigation events the next navigable element may be identical with the current navigable element. This means that the current element remains the same in response to pressing the cursor key "Left" when starting navigation from element A. From a user's perspective, in this case pressing the key "Left" appears to have no navigation effect if the element A is actually emphasized.

In further examples, the navigation data sets are represented by HTML attributes which are a one-dimensional data array specifying next navigable elements only. In these examples, a navigation data set does not includes any explicitly formulated information about the respective navigation events, but the respective navigation events are implicitly specifying by the order of the navigation data sets within the array. For example, the above described navigation data sets formulated as tuples (Up, A), (Down, B), (Left, A), (Right, B) may be coded as list (A, B, A, B). In the present example, the GUI definition document elsewhere defines that the first position within the array represents the next element associated with the navigation event "Down", the second position within the array represents the next element associated with the navigation event "Right" and so on. This may decrease storage and memory consumption required by the GUI definition document and/or reduce processing resources of the electronic device.

In further examples, the HTML elements A through D illustrated in Fig. 3 may be defined in the GUI definition document as illustrated by the following example code fragments:

```
   <input type="text" value=" " navnext="A,B,A,B" uniqueID="A"
   name="element A">
   <input type="text" value="" navnext="A,D,A,C" uniqueID="B"
   name="element B">
   <input type="text" value="" navnext="A,D,B,D" uniqueID="C"
   name="element C">
   <input type="text" value="" navnext="B,D,C,D" uniqueID="D"
   name="element D">
```

Thus, the elements A through D are HTML input fields, in the present examples. Each element A through D includes a unique ID implemented as HTML attribute "uniqueID" of the HTML element. For specifying the element A as an initial start point for navigation, a start ID may be defined in the body tag of the HTML GUI definition document, for example as <body startID="A">. Navigation data sets are implemented as HTML attributes "navnext", which provide a list of values representing the unique IDs of the respective next elements for its element. Within this list, the first entry specifies the next element in response to a navigation event "Up", the second entry specifies the next element in response to a navigation event "Down", then for "Left" and finally for "Right". The underlying order, which defines for the entries the respective associated navigation event, is defined by a JavaScript method "getNext", which is also included in the HTML GUI definition document:

```
   Navigation.getNext = function (navigationEvent)
```

The "getNext" method reads the navigation data set stored as HTML attribute "navnext" in the GUI definition document:

```
   NavigationDataSet =
   Navigation.current.Element.getAttribute('navnext') ;
   nextElementsList = NavigationDataSet.split(",");
```

Then the method "getNext" determines the next element in dependency of the actual navigation event, wherein the respective entry for each navigation event is considered by the JavaScript "switch"-construct. The navigation events represent respective key codes generated by the keyboard when pressing UP, DOWN, LEFT or RIGHT key:

```
          switch (navigationEvent) {
          case keycodes.KEY_UP:
                 return nextElementsList[1];
          case keycodes.KEY_DOWN:
                 return nextElementsList[2];
          case keycodes.KEY_LEFT:
                 return nextElementsList[3];
          case keycodes.KEY_RIGHT:
                 return nextElementsList[4];
          default:
```

In further examples, navigation events may be based on both mouse events and keyboard events as described before with regard to keyboard events. For example, in response to a mouse click, a navigation event is generated, which includes the current mouse cursor position. Some of these examples may correspond to that examples illustrated in Fig. 3. If the mouse cursor hits one of the HTML elements A, B, C and D within the rendered view of the GUI, then the respective HTML element is set as current element. (Whether the mouse cursor hits an element or not is determined by whether the spatial extent of the respective element within the rendered view of the GUI covers the mouse cursor position included in the navigation event or not, for example.) However, it may happen that the user does not hit a navigable element by clicking the mouse (illustrated by the cloud-symbol "click elsewhere" in Fig. 3). In this case a transition to a state O represented by a none-visible HTML element O is carried out. This means that all (visible) HTML elements A to D will be deemphasized (and set as inactive) and the none-visible HTML element O is set as active (but not emphasized since it is a none-visible element). As illustrated in Fig. 3, starting from state O all allowed navigation events will lead to the initial start point element A. Thus, not hitting any of the HTML elements A to D will set the element A as current navigable element upon receiving the next allowed navigation event.

In further examples, as illustrated in Fig. 4 the GUI definition document defines two navigation areas 40, 41, which are each implemented as an HTML layer. Each navigation area 40, 41 includes a full set of HTML elements as navigable elements as well as its own navigational behavior defined by HTML attributes (representing navigation data sets) of the HTML elements. In general, the method of controlling GUIs with multiple navigation areas may include switching between respective ones of the navigation areas. As to the present example, this corresponds to the web browser switching between HTML layers. Switching between HTML layers or navigation areas 40, 41 includes initializing and rendering that HTML layer and navigation area 40, 41 respectively, to which it is switch to. The examples illustrated in Fig. 4 include switching between a first navigation area 40 and a second navigation area 41, wherein the first navigation area 40 represents a main window of the GUI and the second navigation area 41 represents a pop up window of the GUI. When the main window (i.e. the first navigation area 40) is activated, navigation is restricted to HTML elements within the first navigation area 40, whereas navigation is restricted to HTML elements within the second navigation area 41, when the pop up view (i.e. the first navigation area 41) is activated. In the present examples illustrated in Fig. 4, the method of controlling the GUI definition document therefore provides a mechanism to switch between both navigation areas 40, 41, wherein switching is triggered by appropriate navigation area control events other than the navigation events of the navigation areas 40, 41.

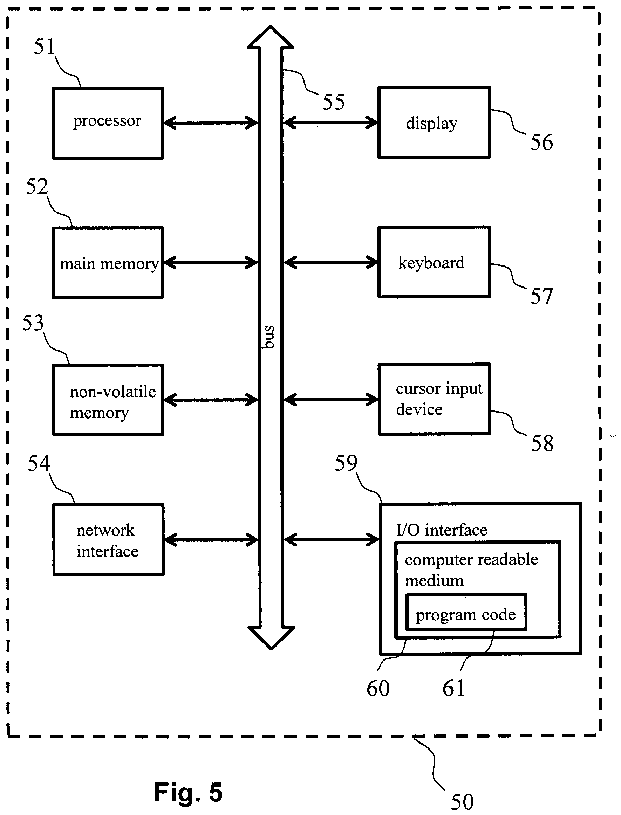

Figure 5 is a diagrammatic representation of the internal structure of an example electronic device 50 which implements the methods described herein. This structure may also apply to an example client or an example server which are configured to implement the methods described herein.

The electronic device 50 includes a processor 51, a main memory 52 and a non-volatile memory 53, e.g. a hard drive, non-removable flash, a solid state drive and/or a removable memory card such as a Micro or Mini SD card, which permanently stores the software enabling electronic device 50 to execute its functions, for example an operating system. Furthermore, the electronic device 50 includes a display 56, a keyboard 57 and, optionally, a cursor input device 58 (such as a mouse). Optionally, an additional I/O interfaces 59 such as card reader and USB interfaces may be present. Optionally, the electronic device 50 includes a network interface 54 (e.g. a wireless network interface such as a Wi-Fi and/or Bluetooth interface) and/or a 2G/3G/4G mobile network interface device. All of them 51 - 54 and 56 - 59 communicate with each other via a bus 55.

The electronic device 50 is arranged to execute a program code 61 stored on a computer readable medium 60, to cause it to perform any of the methodologies explained above. For example, the program code 61 may at least include the GUI definition document. An executable set of instructions i.e. the program code 60 embodying any one, or all, of the methodologies described above, resides completely, or at least partially, permanently on a computer readable medium 61, which can be accessed by the electronic device 50 through the I/O interface 59. Optionally, the program code 61 may be additionally or alternatively stored in the non-volatile memory 53. For example, the program code 61 may be copied from the computer readable medium 60 being temporally connected with the electronic device 50 via the I/O interface 59 into the non-volatile memory 53. When being executed, respective process data resides in the main memory 52 and/or the processor 51. The program code 61 may further be transmitted or received as a propagated signal through the wired or wireless network interface 54 from/to a software server within a local area network or the Internet.

Although certain products and methods constructed in accordance with the teachings of the invention have been described herein, the scope of coverage of this patent is not limited thereto. On the contrary, this patent covers all embodiments of the teachings of the invention fairly falling within the scope of the appended claims.

## Claims

1. A method of controlling a graphical user interface, GUI, of an electronic device (50),
wherein the GUI is defined by a GUI definition document (20) processed by the electronic device (50), the GUI definition document (20) including at least two navigation policies describing navigational behavior of the GUI and the GUI definition document (20) defining
a layout (21) of the GUI for rendering the GUI,
navigable elements (22) of the GUI,
at least one navigation event, and
at least one navigation data set (23) per navigable element (22), defining the navigational behavior of the GUI according to one of the at least two navigation policies, wherein, for a respective navigable element (22), a navigation data set (23) specifies for a respective one of the at least one navigation event a next one of the navigable elements (22) to be navigated to in response to the navigation event,
wherein the GUI definition document (20) further defines the navigational behavior of the GUI according to the other of the at least two navigation policies;
the method comprising
rendering (10), by the electronic device (50), the GUI according to the layout (21); and
navigating (11) from a current navigable element (22) to a next navigable element (22) by:
receiving (12), by the electronic device (50), a navigation event, and
in response to the received navigation event, setting (13), by the electronic device (50), the current navigable element (22) as inactive and the next navigable element (22) as active for user interaction,
wherein, in accordance with the one of the at least two navigation policies, the next navigable element (22) is determined based on the at least one navigation data set (23) of the current navigable element (22) and the received navigation event, and
wherein, in accordance with the other of the at least two navigation policies, the next navigable element (22) is determined by analyzing a spatial relation between the current navigable element (22) and surrounding navigable elements within the GUI being rendered and determining a navigable element (22) nearest to the current navigable element (22) in a horizontal and/or vertical direction as the next navigable element (22).

2. The method of claim 1, further comprising emphasizing the next navigable element (22) in response to setting (13) it active.

3. The method of any one of the preceding claims, wherein the navigation event comprises at least one of a key code from a keyboard (57) or a character code from a user input.

4. The method of any one of the preceding claims, wherein the GUI definition document (20) defines at least 2, 4 or 6 navigation data sets (23) per navigable element (22), wherein each navigation data set (23) within the data sets (23) of a particular navigable element (22) is unique with regard to its corresponding navigation event.

5. The method of any one of the preceding claims,
wherein the GUI definition document (20) defines
a unique navigable element identifier for each navigable element (22), and
a start identifier, which corresponds to the unique navigable element identifier of a particular one of the navigable elements (22); and
wherein the method further comprises
maintaining a current navigable element identifier, and
initializing the GUI, which includes setting the current navigable element identifier to the value of the start identifier; and
wherein navigating (11) from the current navigable element (22) to the next navigable element (22) further comprises
setting the current navigable element identifier to the value of the unique navigable element identifier of the next navigable element (22) when navigating (11) to the next navigable element (22).

6. The method of any one of the preceding claims, wherein the GUI definition document (20) comprises an HTML document, the navigable elements (22) are HTML elements; and wherein rendering the GUI is carried out by a web browser.

7. The method of any one of the preceding claims, wherein navigating (11) from the current navigable element (22) to the next navigable element (22) is carried out by JavaScript by a web browser.

8. The method of any one of the preceding claims, wherein the GUI definition document (20) further defines at least two navigation areas (40, 41), wherein for each of the at least two navigation areas (40, 41) the GUI definition document (20) defines
a layout (21) associated with the respective navigation area (40, 41) for rendering the GUI,
navigable elements (22) associated with the respective navigation area (40, 41),
at least one navigation event, and
at least one navigation data set (23) per navigable element (22), wherein a navigation data set (23) specifies for a respective one of the at least one navigation event a next one of the navigable elements (22) to be navigated to in response to the navigation event; and
wherein the method further comprises
selecting one of the at least two navigation areas (40, 41);
rendering the GUI according to the layout (21) of the selected navigation area (40, 41); and
navigating (11) from the current navigable element (22) to the next navigable element (22) by:
receiving (12) a navigation event; and
in response to the received navigation event, setting (13), by the electronic device (50), the current navigable element (22) of the selected navigation area as inactive and the next navigable element (22) of the selected navigation area (40, 41) as active for user interaction, wherein the next navigable element (22) being determined based on the at least one navigation data set (23) of the current navigable element (22).

9. An electronic device (50) for controlling a graphical user interface, GUI, wherein the electronic device (50) is configured to control the GUI, wherein the electronic device (50) is configured to process a GUI definition document (20), the GUI definition document (20) including at least two navigation policies describing navigational behavior of the GUI and the GUI definition document (20) defining
a layout (21) of the GUI for rendering the GUI,
navigable elements (22) of the GUI,
at least one navigation event, and
at least one navigation data set (23) per navigable element (22), defining the navigational behavior of the GUI according to one of the at least two navigation policies, wherein, for a respective navigable element (22), a navigation data set (23) specifies for a respective one of the at least one navigation event a next one of the navigable elements (22) to be navigated to in response to the navigation event,
wherein the GUI definition document (20) further defines the navigational behavior of the GUI according to the other of the at least two navigation policies;
the electronic device (50) being further configured to
render (10) the GUI according to the layout (21); and
navigate (11) from a current navigable element (22) to a next navigable element (22) by:
receiving (12), by the electronic device (50), a navigation event, and
in response to the received navigation event, setting (13), by the electronic device (50), the current navigable element (22) as inactive and the next navigable element (22) as active for user interaction,
wherein, in accordance with the one of the at least two navigation policies, the next navigable element (22) is determined based on the at least one navigation data set (23) of the current navigable element (22) and the received navigation event, and
wherein, in accordance with the other of the at least two navigation policies, the next navigable element (22) is determined by analyzing a spatial relation between the current navigable element (22) and surrounding navigable elements within the GUI being rendered and determining a navigable element (22) nearest to the current navigable element (22) in a horizontal and/or vertical direction as the next navigable element (22).

10. The electronic device (50) according to claim 9, wherein the electronic device (50) is further configured to carry out the method of any one of the claims 2 to 8.

11. The electronic device (50) of claim 9 or 10, wherein the electronic device (50) is further configured as a client to receive the GUI definition document (20) from a server.

12. The electronic device (50) of any one of the claims 9 to 11, wherein the electronic device (50) comprises
a keyboard (57) configured to generate navigation events; and
a display (56) configured to display the rendered the GUI.

13. A computer program configured to control a graphical user interface, GUI, of an electronic device (50),
wherein the GUI is defined by a GUI definition document (20), the GUI definition document (20) including at least two navigation policies describing navigational behavior of the GUI and the GUI definition document (20) defining
a layout (21) of the GUI for rendering the GUI,
navigable elements (22) of the GUI,
at least one navigation event, and
at least one navigation data set (23) per navigable element (22), defining the navigational behavior of the GUI according to one of the at least two navigation policies, wherein, for a respective navigable element (22), a navigation data set (23) specifies for a respective one of the at least one navigation event a next one of the navigable elements (22) to be navigated to in response to the navigation event,
wherein the GUI definition document (20) further defines the navigational behavior of the GUI according to the other of the at least two navigation policies;
the computer program further configured to
render (10), by the electronic device (50), the GUI according to the layout (21); and
navigate (11) from a current navigable element (22) to a next navigable element (22) by:
receiving (12), by the electronic device (50), a navigation event, and
in response to the received navigation event, setting (13), by the electronic device (50), the current navigable element (22) as inactive and the next navigable element (22) as active for user interaction,
wherein, in accordance with the one of the at least two navigation policies, the next navigable element (22) is determined based on the at least one navigation data set (23) of the current navigable element (22) and the received navigation event, and
wherein, in accordance with the other of the at least two navigation policies, the next navigable element (22) is determined by analyzing a spatial relation between the current navigable element (22) and surrounding navigable elements within the GUI being rendered and determining a navigable element (22) nearest to the current navigable element (22) in a horizontal and/or vertical direction as the next navigable element (22).

14. The computer program according to claim 13, further configured to carry out the method of any one of claims 2 to 8.

## Patentansprüche

1. Verfahren zum Steuern einer grafischen Benutzeroberfläche, GUI, einer elektronischen Vorrichtung (50),
wobei die GUI durch ein GUI-Definitionsdokument (20) definiert ist, das von der elektronischen Vorrichtung (50) verarbeitet wird, wobei das GUI-Definitionsdokument (20) wenigstens zwei Navigationsrichtlinien aufweist, die das Navigationsverhalten der GUI beschreiben, und wobei das GUI-Definitionsdokument (20),
ein Layout (21) der GUI zum Rendern der GUI,
navigierbare Elemente (22) der GUI,
wenigstens ein Navigationsereignis und
wenigstens einen Navigationsdatensatz (23) pro navigierbarem Element (22) definiert, der das Navigationsverhalten der GUI gemäß einer der wenigstens zwei Navigationsrichtlinien definiert, wobei für ein jeweiliges navigierbares Element (22) ein Navigationsdatensatz (23) für jeweils eines des wenigstens einen Navigationsereignisses ein nächstes navigierbares Element der navigierbaren Elemente (22) angibt, zu dem als Reaktion auf das Navigationsereignis zu navigieren ist,
wobei das GUI-Definitionsdokument (20) ferner das Navigationsverhalten der GUI gemäß der anderen wenigstens zwei Navigationsrichtlinien definiert;
wobei das Verfahren umfasst
Rendern (10) der GUI durch die elektronische Vorrichtung (50) gemäß dem Layout (21);
und
Navigieren (11) von einem aktuellen navigierbaren Element (22) zu einem nächsten navigierbaren Element (22) durch:
Empfangen (12) eines Navigationsereignisses durch die elektronische Vorrichtung (50) und
als Reaktion auf das empfangene Navigationsereignis, Inaktiv-Setzen (13) des aktuellen navigierbaren Elements (22) durch die elektronische Vorrichtung (50) und Aktiv-Setzen des nächsten navigierbaren Elements (22) zur Benutzerinteraktion,
wobei gemäß der einen der wenigstens zwei Navigationsrichtlinien das nächste navigierbare Element (22) basierend auf dem wenigstens einen Navigationsdatensatz (23) des aktuellen navigierbaren Elements (22) und dem empfangenen Navigationsereignis bestimmt wird, und
wobei gemäß den anderen der wenigstens zwei Navigationsrichtlinien das nächste navigierbare Element (22) durch Analysieren einer räumlichen Beziehung zwischen dem aktuellen navigierbaren Element (22) und umgebenden navigierbaren Elementen innerhalb der gerenderten GUI bestimmt wird und ein navigierbares Element (22) als das nächste navigierbare Element (22) bestimmt wird, das dem aktuellen navigierbaren Element (22) in horizontaler und/oder vertikaler Richtung am nächsten ist.

2. Verfahren gemäß Anspruch 1, ferner ein Hervorheben des nächsten navigierbaren Elements (22) als Reaktion auf dessen Aktiv-Setzen (13) umfassend.

3. Verfahren gemäß einem der vorhergehenden Ansprüche, wobei das Navigationsereignis wenigstens einen Tastencode einer Tastatur (57) oder einen Zeichencode einer Benutzereingabe umfasst.

4. Verfahren gemäß einem der vorhergehenden Ansprüche, wobei das GUI-Definitionsdokument (20) wenigstens 2, 4 oder 6 Navigationsdatensätze (23) pro navigierbarem Element (22) definiert, wobei jeder Navigationsdatensatz (23) innerhalb der Datensätze (23) eines bestimmten navigierbaren Elements (22) in Bezug auf sein entsprechendes Navigationsereignis eindeutig ist.

5. Verfahren gemäß einem der vorhergehenden Ansprüche,
wobei das GUI-Definitionsdokument (20)
eine eindeutige navigierbare Elementkennung für jedes navigierbare Element (22) und
eine Startkennung, die der eindeutigen, navigierbaren Elementkennung eines bestimmten navigierbaren Elements (22) entspricht, definiert; und
wobei das Verfahren ferner umfasst
Führen einer aktuellen navigierbaren Elementkennung und
Initialisieren der GUI, was Setzen der aktuellen navigierbaren Elementkennung auf den Wert der Startkennung aufweist; und
wobei Navigieren (11) vom aktuellen navigierbaren Element (22) zum nächsten navigierbaren Element (22) ferner umfasst
Setzen der aktuellen navigierbaren Elementkennung auf den Wert der eindeutigen navigierbaren Elementkennung des nächsten navigierbaren Elements (22) beim Navigieren (11) zum nächsten navigierbaren Element (22).

6. Verfahren gemäß einem der vorhergehenden Ansprüche, wobei das GUI-Definitionsdokument (20) ein HTML-Dokument umfasst, die navigierbaren Elemente (22) HTML-Elemente sind und wobei das Rendern der GUI von einem Webbrowser durchgeführt wird.

7. Verfahren gemäß einem der vorhergehenden Ansprüche, wobei Navigieren (11) vom aktuellen navigierbaren Element (22) zum nächsten navigierbaren Element (22) durch JavaScript durch einem Webbrowser ausgeführt wird.

8. Verfahren gemäß einem der vorhergehenden Ansprüche, wobei das GUI-Definitionsdokument (20) ferner wenigstens zwei Navigationsbereiche (40, 41) definiert, wobei für jeden der wenigstens zwei Navigationsbereiche (40, 41) das GUI-Definitionsdokument (20)
ein Layout (21) das dem jeweiligen Navigationsbereich (40,41) zum Rendern der GUI zugeordnet ist,
navigierbare Elemente (22), die dem jeweiligen Navigationsbereich (40,41) zugeordnet sind,
wenigstens ein Navigationsereignis und
wenigstens einen Navigationsdatensatz (23) pro navigierbarem Element (22) definiert, wobei ein Navigationsdatensatz (23) für jeweils eines des wenigstens einen Navigationsereignisses ein nächstes navigierbares Element aus den navigierbaren Elementen (22) angibt, zu dem als Reaktion auf das Navigationsereignis zu navigieren ist; und
wobei das Verfahren ferner umfasst
Auswählen von einem aus den wenigstens zwei Navigationsbereichen (40, 41),
Rendern der GUI gemäß des Layouts (21) des ausgewählten Navigationsbereichs (40,41), und
Navigieren (11) vom aktuellen navigierbaren Element (22) zum nächsten navigierbaren Element (22) durch:
Empfangen (12) eines Navigationsereignisses; und
als Reaktion auf das empfangene Navigationsereignis, Inaktiv-Setzen (13), durch die elektronische Vorrichtung (50), des aktuellen navigierbaren Elements (22) des ausgewählten Navigationsbereichs und Aktiv-Setzen des nächsten, navigierbaren Elements (22) des ausgewählten Navigationsbereichs (40, 41) zur Benutzerinteraktion, wobei das nächste navigierbare Element (22) basierend auf dem wenigstens einen Navigationsdatensatz (23) des aktuellen navigierbaren Element (22) bestimmt wird.

9. Elektronische Vorrichtung (50) zum Steuern einer grafischen Benutzeroberfläche, GUI, wobei die elektronische Vorrichtung (50) dazu eingerichtet ist, die GUI zu steuern, wobei die elektronische Vorrichtung (50) dazu eingerichtet ist, ein GUI-Definitionsdokuments (20) zu verarbeiten, wobei das GUI-Definitionsdokument (20) wenigstens zwei Navigationsrichtlinien aufweist, die das Navigationsverhalten der GUI beschreiben, und wobei das GUI-Definitionsdokument (20)
ein Layout (21) der GUI zum Rendern der GUI,
navigierbare Elemente (22) der GUI,
wenigstens ein Navigationsereignis, und
wenigstens einen Navigationsdatensatz (23) pro navigierbarem Element (22) definiert, der das Navigationsverhalten der GUI gemäß einer der wenigstens zwei Navigationsrichtlinien definiert, wobei für ein jeweiliges navigierbares Element (22) ein Navigationsdatensatz (23) für jeweils eines des wenigstens einen Navigationsereignisses, ein nächstes navigierbares Element der navigierbaren Elemente (22) angibt, zu dem als Reaktion auf das Navigationsereignis zu navigieren ist,
wobei das GUI-Definitionsdokument (20) ferner das Navigationsverhalten der GUI gemäß der anderen der wenigstens zwei Navigationsrichtlinien definiert;
wobei die elektronische Vorrichtung (50) ferner dazu eingerichtet ist die GUI gemäß dem Layout (21) zu rendern (10); und
von einem aktuellen navigierbaren Element (22) zu einem nächsten navigierbaren Element (22) zu navigieren (11) durch:
Empfangen (12), durch die elektronische Vorrichtung (50), eines Navigationsereignisses und als Reaktion auf das empfangene Navigationsereignis, Inaktiv-Setzen (13) des aktuellen navigierbaren Elements (22) durch die elektronische Vorrichtung und Aktiv-Setzen des nächsten navigierbaren Elements (22) zur Benutzerinteraktion,
wobei gemäß der einen der wenigstens zwei Navigationsrichtlinien das nächste navigierbare Element (22) basierend auf dem wenigstens einen Navigationsdatensatz (23) des aktuellen navigierbaren Elements (22) und dem empfangenen Navigationsereignis bestimmt wird, und
wobei gemäß der anderen der wenigstens zwei Navigationsrichtlinien, das nächste navigierbare Element (22) durch Analysieren einer räumlichen Beziehung zwischen dem aktuellen navigierbaren Element (22) und umgebenden navigierbaren Elementen innerhalb der gerenderten GUI bestimmt wird und ein navigierbares Element (22) als das nächste navigierbare Element (22) bestimmt wird, das dem aktuellen navigierbaren Element (22) in horizontaler und/oder vertikaler Richtung am nächsten liegt.

10. Elektronische Vorrichtung (50) gemäß Anspruch 9, wobei die elektronische Vorrichtung (50) ferner dazu eingerichtet ist, das Verfahren nach einem der Ansprüche 2 bis 8 auszuführen.

11. Elektronische Vorrichtung (50) gemäß Anspruch 9 oder 10, wobei die elektronische Vorrichtung (50) ferner als Client eingerichtet ist, um das GUI-Definitionsdokument (20) von einem Server zu empfangen.

12. Elektronische Vorrichtung (50) gemäß einem der Ansprüche 9 bis 11, wobei die elektronische Vorrichtung (50) umfasst
eine Tastatur (57) die dazu eingerichtet ist, Navigationsereignisse zu erzeugen; und
ein Display (56) das dazu eingerichtet ist, die gerenderte GUI anzuzeigen.

13. Computerprogramm, das dazu eingerichtet ist, eine grafische Benutzeroberfläche, GUI, einer elektronischen Vorrichtung (50) zu steuern,
wobei die GUI durch ein GUI-Definitionsdokument (20) definiert ist, und wobei das GUI-Definitionsdokument (20) wenigstens zwei Navigationsrichtlinien aufweist, die das Navigationsverhalten der GUI beschreiben, und das GUI-Definitionsdokument (20)
ein Layout (21) der GUI zum Rendern der GUI,
navigierbare Elemente (22) der GUI,
wenigstens ein Navigationsereignis und
wenigstens einen Navigationsdatensatz (23) pro navigierbarem Element (22) definiert, der das Navigationsverhalten der GUI gemäß einer der wenigstens zwei Navigationsrichtlinien definiert, wobei für ein jeweiliges navigierbares Element (22) ein Navigationsdatensatz (23) für jeweils eines des wenigstens einen Navigationsereignisses, ein nächstes navigierbares Element der navigierbaren Elemente (22) angibt, zu dem als Reaktion auf das Navigationsereignis zu navigieren ist,
wobei das GUI-Definitionsdokument (20) ferner das Navigationsverhalten der GUI gemäß der anderen der wenigstens zwei Navigationsrichtlinien definiert;
wobei das Computerprogramm ferner dazu eingerichtet ist
die GUI durch die elektronische Vorrichtung (50) gemäß dem Layout (21) zu rendern (10); und
von einem aktuellen navigierbaren Element (22) zu einem nächsten navigierbaren Element (22) zu navigieren, durch:
Empfangen (12), durch die elektronische Vorrichtung (50), eines Navigationsereignisses und
als Reaktion auf das empfangene Navigationsereignis, Inaktiv-Setzen (13) des aktuellen navigierbaren Elements (22) durch die elektronische Vorrichtung (50) und Aktiv-Setzen des nächsten navigierbaren Elements (22) zur Benutzerinteraktion,
wobei gemäß der einen der wenigstens zwei Navigationsrichtlinien das nächste navigierbare Element (22) basierend auf dem wenigstens einen Navigationsdatensatz (23) des aktuellen navigierbaren Elements (22) und dem empfangenen Navigationsereignis bestimmt wird, und
wobei gemäß der anderen der wenigstens zwei Navigationsrichtlinien das nächste navigierbare Element (22) durch Analysieren einer räumlichen Beziehung zwischen dem aktuellen navigierbaren Element (22) und umgebenden navigierbaren Elementen innerhalb der gerenderten GUI bestimmt wird und ein navigierbares Element (22) als das nächste navigierbare Element (22) bestimmt wird, das dem aktuellen navigierbaren Element (22) in horizontaler und/oder vertikaler Richtung am nächsten liegt.

14. Computerprogramm gemäß Anspruch 13, das ferner dazu eingerichtet ist, das Verfahren nach einem der Ansprüche 2 bis 8 auszuführen.

## Revendications

1. Procédé de commande d'une interface utilisateur graphique, GUI, d'un dispositif électronique (50),
dans lequel la GUI est définie par un document de définition de GUI (20) traité par le dispositif électronique (50), le document de définition de GUI (20) incluant au moins deux politiques de navigation décrivant le comportement de navigation de la GUI et le document de définition de GUI (20) définissant
une disposition (21) de la GUI pour le rendu de la GUI,
des éléments navigables (22) de la GUI,
au moins un événement de navigation, et
au moins un ensemble de données de navigation (23) par élément navigable (22), définissant le comportement de navigation de la GUI conformément à l'une desdites au moins deux politiques de navigation, dans lequel, pour un élément navigable respectif (22), un ensemble de données de navigation (23) spécifie, pour l'un respectif de l'au moins événement de navigation, un élément suivant parmi les éléments navigables (22) sur lequel naviguer en réponse à l'événement de navigation,
dans lequel le document de définition de GUI (20) définit en outre le comportement de navigation de la GUI conformément à l'autre desdites au moins deux politiques de navigation ;
le procédé comprenant
le rendu (10), par le dispositif électronique (50), de la GUI conformément à la disposition (21) ; et
la navigation (11) d'un élément navigable actuel (22) vers un élément navigable suivant (22) par :
la réception (12), par le dispositif électronique (50), d'un événement de navigation, et
en réponse à l'événement de navigation reçu, la définition (13), par le dispositif électronique (50), de l'élément navigable actuel (22) comme inactif et de l'élément navigable suivant (22) comme actif pour une interaction d'utilisateur,
dans lequel, conformément à l'une desdites au moins deux politiques de navigation, l'élément navigable suivant (22) est déterminé sur la base de l'au moins un ensemble de données de navigation (23) de l'élément navigable actuel (22) et de l'événement de navigation reçu, et
dans lequel, conformément à l'autre desdites au moins deux politiques de navigation, l'élément navigable suivant (22) est déterminé en analysant une relation spatiale entre l'élément navigable actuel (22) et des éléments navigables environnants à l'intérieur de la GUI en cours de rendu et en déterminant un élément navigable (22) le plus proche de l'élément navigable actuel (22) dans une direction horizontale et/ou verticale comme l'élément navigable suivant (22).

2. Procédé selon la revendication 1, comprenant la mise en évidence de l'élément navigable suivant (22) en réponse à sa définition (13) comme actif.

3. Procédé selon l'une quelconque des revendications précédentes, dans lequel l'événement de navigation comprend au moins l'un parmi d'un code de touches provenant d'un clavier (57) ou d'un code de caractères provenant d'une entrée d'utilisateur.

4. Procédé selon l'une quelconque des revendications précédentes, dans lequel le document de définition de GUI (20) définit au moins 2, 4 ou 6 ensembles de données de navigation (23) par élément navigable (22), dans lequel chaque ensemble de données de navigation (23) à l'intérieur des ensembles de données (23) d'un élément navigable particulier (22) est unique au regard de son événement de navigation correspondant.

5. Procédé selon l'une quelconque des revendications précédentes,
dans lequel le document de définition de GUI (20) définit
un identifiant unique d'élément navigable pour chaque élément navigable (22), et
un identifiant de départ, qui correspond à l'identifiant unique d'élément navigable d'un élément particulier parmi les éléments navigables (22) ; et
dans lequel le procédé comprend en outre
le maintien d'un identifiant d'élément navigable actuel, et
l'initialisation de la GUI, qui inclut la définition de l'identifiant d'élément navigable actuel à la valeur de l'identifiant de départ ; et dans lequel la navigation (11) de l'élément navigable actuel (22) vers l'élément navigable suivant (22) comprend en outre
la définition de l'identifiant d'élément navigable actuel à la valeur de l'identifiant unique d'élément navigable de l'élément navigable suivant (22) lors de la navigation (11) vers l'élément navigable suivant (22).

6. Procédé selon l'une quelconque des revendications précédentes, dans lequel le document de définition du GUI (20) comprend un document HTML, les éléments navigables (22) sont des éléments HTML ; et dans lequel le rendu de la GUI est réalisé par un navigateur web.

7. Procédé selon l'une quelconque des revendications précédentes, dans lequel la navigation (11) de l'élément navigable actuel (22) vers l'élément navigable suivant (22) est réalisée par JavaScript par un navigateur web.

8. Procédé selon l'une quelconque des revendications précédentes, dans lequel le document de définition de GUI (20) définit en outre au moins deux zones de navigation (40, 41), dans lequel, pour chacune desdites au moins deux zones de navigation (40, 41), le document de définition de GUI (20) définit
une disposition (21) associée à la zone de navigation respective (40, 41) pour le rendu de la GUI,
des éléments navigables (22) associés à la zone de navigation respective (40, 41),
au moins un événement de navigation, et
au moins un ensemble de données de navigation (23) par élément navigable (22), dans lequel un ensemble de données de navigation (23) spécifie, pour l'un respectif de l'au moins événement de navigation, un élément suivant parmi les éléments navigables (22) sur lequel naviguer en réponse à l'événement de navigation ; et
dans lequel le procédé comprend en outre
la sélection de l'une desdites au moins deux zones de navigation (40, 41) ;
le rendu de la GUI conformément à la disposition (21) de la zone de navigation sélectionnée (40, 41) ; et
la navigation (11) de l'élément navigable actuel (22) vers l'élément navigable suivant (22) par :
la réception (12) d'un événement de navigation ; et
en réponse à l'événement de navigation reçu, la définition (13), par le dispositif électronique (50), de l'élément navigable actuel (22) de la zone de navigation sélectionnée comme inactif et de l'élément navigable suivant (22) de la zone de navigation sélectionnée (40, 41) comme actif pour une interaction d'utilisateur, dans lequel l'élément navigable suivant (22) est déterminé sur la base de l'au moins un ensemble de données de navigation (23) de l'élément navigable actuel (22).

9. Dispositif électronique (50) pour commander une interface utilisateur graphique, GUI, dans lequel le dispositif électronique (50) est configuré pour commander la GUI, dans lequel le dispositif électronique (50) est configuré pour traiter un document de définition de GUI (20), le document de définition de GUI (20) incluant au moins deux politiques de navigation décrivant le comportement de navigation de la GUI, et le document de définition de GUI (20) définissant
une disposition (21) de la GUI pour le rendu de la GUI,
des éléments navigables (22) de la GUI,
au moins un événement de navigation, et
au moins un ensemble de données de navigation (23) par élément navigable (22), définissant le comportement de navigation de la GUI conformément à l'une desdites au moins deux politiques de navigation, dans lequel, pour un élément navigable respectif (22), un ensemble de données de navigation (23) spécifie, pour l'un respectif de l'au moins événement de navigation, un élément suivant parmi les éléments navigables (22) sur lequel naviguer en réponse à l'événement de navigation,
dans lequel le document de définition de GUI (20) définit en outre le comportement de navigation de la GUI conformément à l'autre desdites au moins deux politiques de navigation ;
le dispositif électronique (50) étant en outre configuré pour
le rendu (10) de la GUI conformément à la disposition (21) ; et
la navigation (11) d'un élément navigable actuel (22) vers un élément navigable suivant (22) par :
la réception (12), par le dispositif électronique (50), d'un événement de navigation, et
en réponse à l'événement de navigation reçu, la définition (13), par le dispositif électronique (50), de l'élément navigable actuel (22) comme inactif et de l'élément navigable suivant (22) comme actif pour une interaction d'utilisateur, dans lequel, conformément à l'une desdites au moins
deux politiques de navigation, l'élément navigable suivant (22) est déterminé sur la base de l'au moins un ensemble de données de navigation (23) de l'élément navigable actuel (22) et de l'événement de navigation reçu, et
dans lequel, conformément à l'autre desdites au moins deux politiques de navigation, l'élément navigable suivant (22) est déterminé en analysant une relation spatiale entre l'élément navigable actuel (22) et des éléments navigables environnants à l'intérieur de la GUI en cours de rendu et en déterminant un élément navigable (22) le plus proche de l'élément navigable actuel (22) dans une direction horizontale et/ou verticale comme l'élément navigable suivant (22).

10. Dispositif électronique (50) selon la revendication 9, dans lequel le dispositif électronique (50) est en outre configuré pour exécuter le procédé selon l'une quelconque des revendications 2 à 8.

11. Dispositif électronique (50) selon la revendication 9 ou 10, dans lequel le dispositif électronique (50) est en outre configuré en tant que client pour recevoir le document de définition de GUI (20) en provenance d'un serveur.

12. Dispositif électronique (50) selon l'une quelconque des revendications 9 à 11, dans lequel le dispositif électronique (50) comprend
un clavier (57) configuré pour générer des événements de navigation ; et
un afficheur (56) configuré pour afficher le rendu de la GUI.

13. Programme informatique configuré pour commander une interface utilisateur graphique, GUI, d'un dispositif électronique (50),
dans lequel la GUI est définie par un document de définition de GUI (20), le document de définition de GUI (20) incluant au moins deux politiques de navigation décrivant le comportement de navigation de la GUI et le document de définition de GUI (20) définissant
une disposition (21) de la GUI pour le rendu de la GUI,
des éléments navigables (22) de la GUI,
au moins un événement de navigation, et
au moins un ensemble de données de navigation (23) par élément navigable (22), définissant le comportement de navigation de la GUI conformément à l'une desdites au moins deux politiques de navigation, dans lequel, pour un élément navigable respectif (22), un ensemble de données de navigation (23) spécifie, pour l'un respectif de l'au moins événement de navigation, un élément suivant parmi les éléments navigables (22) sur lequel naviguer en réponse à l'événement de navigation,
dans lequel le document de définition de GUI (20) définit en outre le comportement de navigation de la GUI conformément à l'autre desdites au moins deux politiques de navigation ;
le programme informatique étant en outre configuré pour
le rendu (10), par le dispositif électronique (50), de la GUI conformément à la disposition (21) ; et
la navigation (11) d'un élément navigable actuel (22) vers un élément navigable suivant (22) par :
la réception (12), par le dispositif électronique (50), d'un événement de navigation, et
en réponse à l'événement de navigation reçu, la définition (13), par le dispositif électronique (50), de l'élément navigable actuel (22) comme inactif et de l'élément navigable suivant (22) comme actif pour une interaction d'utilisateur,
dans lequel, conformément à l'une desdites au moins deux politiques de navigation, l'élément navigable suivant (22) est déterminé sur la base de l'au moins un ensemble de données de navigation (23) de l'élément navigable actuel (22) et de l'événement de navigation reçu, et
dans lequel, conformément à l'autre desdites au moins deux politiques de navigation, l'élément navigable suivant (22) est déterminé en analysant une relation spatiale entre l'élément navigable actuel (22) et des éléments navigables environnants à l'intérieur de la GUI rendue et en déterminant un élément navigable (22) le plus proche de l'élément navigable actuel (22) dans une direction horizontale et/ou verticale comme l'élément navigable suivant (22).

14. Programme informatique selon la revendication 13, configuré en outre pour exécuter le procédé selon l'une quelconque des revendications 2 à 8.
